# EUROPÄISCHE PATENTANMELDUNG

(11) **EP 4 663 543 A1**
(43) Veröffentlichungstag der Anmeldung: **17.12.2025**
(21) Anmeldenummer: 25182129.4
(22) Anmeldetag: 11.06.2025
(51) Int. Cl.: B64C 25/56, B64D 25/18

(54) **NOTSCHWIMMSYSTEM UND LUFTFAHRZEUG MIT NOTSCHWIMMSYSTEM**

(30) Priorität: 13.06.2024 DE 102024116613
(71) Anmelder: AIRBUS HELICOPTERS DEUTSCHLAND GmbH, 86609 Donauwörth (DE)
(72) Erfinder: EL MOCTAR, Ould, 22393 Hamburg (DE); PETERS, Andreas, 40470 Düsseldorf (DE); TÖDTER, Simon, 47137 Duisburg (DE)
(74) Vertreter: GPI Brevets

(57) **Zusammenfassung**

Die Erfindung betrifft ein Notschwimmsystem für Luftfahrzeuge (1), insbesondere welches an dem Landegestell oder dem Rumpf eines Helikopters befestigbar ist, umfassend wenigstens zwei aufblasbare Schwimmkörper (2, 2a, 2b), die jeweils in einer Längserstreckungsrichtung erstreckt sind und die in einer horizontalen Richtung quer, insbesondere senkrecht zur Längserstreckungsrichtung beabstandet sind, wobei die jeweiligen Schwimmkörper (2, 2a, 2b) senkrecht zu ihrer Längserstreckungsrichtung im aufgeblasenen Zustand zwischen ihren Enden eine Querschnittsform aufweisen, die mehreckig ist. Die Erfindung betrifft auch ein Luftfahrzeug, insbesondere einen Helikopter, welches an seinem Landegestell oder seinem Rumpf ein Notschwimmsystem nach einem der vorherigen Ansprüche aufweist, insbesondere, wobei die Längserstreckungsrichtung der Schwimmkörper (2, 2a, 2b) parallel zur Längserstreckungsachse oder quer, insbesondere senkrecht zur Längserstreckungsachse des Luftfahrzeugs (1) ausgerichtet ist.

## Beschreibung

Die Erfindung betrifft ein Notschwimmsystem für Luftfahrzeuge, insbesondere welches an dem Landegestell oder dem Rumpf eines Luftfahrzeugs, vorzugsweise an einem Helikopter befestigbar ist, umfassend wenigstens zwei aufblasbare Schwimmkörper, die jeweils in einer Längserstreckungsrichtung erstreckt sind und die in einer horizontalen Richtung quer, insbesondere senkrecht zur Längserstreckungsrichtung beabstandet sind.

Diese genannte Beabstandung in einer horizontalen Richtung weisen die Schwimmkörper zumindest in einer Nutzungslage des Notschwimmsystems auf, wenn ein Luftfahrzeug mit einem solchen Notschwimmsystem auf einer ruhigen Wasseroberfläche schwimmt. Soweit nicht anders angegeben beziehen sich alle Richtungsangaben auf eine Nutzungslage des Systems auf einer ruhigen Wasseroberfläche.

Die Erfindung betrifft auch ein Luftfahrzeug, insbesondere einen Helikopter, mit einem solchen Notschwimmsystem.

Mit Inkrafttreten der Zulassungsrichtlinie CS-27 der Agentur der Europäischen Union für Flugsicherheit (EASA) im Jahr 2021 wurden die Zulassungskriterien für Helikopter signifikant verschärft. Zuvor musste zur Zertifizierung für den weltweiten Einsatz nur nachgewiesen werden, dass der Helikopter nach dem Notwassern mit dem angebrachten Notschwimmsystem stabil in harmonischen (regelmäßigen) Wellen schwimmt. Die neuen Regularien schreiben hingegen vor, dass die Schwimmstabilität im Seegang durch Modellversuche in unregelmäßigen Wellen bei Seegangstärke 6 für eine weltweite Zulassung nachgewiesen werden muss. Die Schwimmstabilität gilt als nachgewiesen, wenn eine Kenterwahrscheinlichkeit von 3% mit intakten Schwimmkörpern bzw. 30% mit einem beschädigten Schwimmkörper nicht überschritten wird.

Herkömmliche Notschwimmsysteme weisen kreiszylindrische aufblasbare Schwimmkörper auf und zeigen im Modellversuch keine ausreichende Kenterwahrscheinlichkeit, so dass sich solche Notschwimmsysteme mit im aufgeblasenen Zustand kreiszylindrisch geformten Schwimmkörpern als voraussichtlich nicht zertifizierbar erweisen.

Bei Untersuchungen konnten drei grundlegende Schritte des Kentervorgangs ermittelt werden. Im ersten Schritt dreht sich der Helikopter nach einer Notlandung mit einem Notschwimmsystem quer zu den einkommenden Wellen, sodass diese seitlich, insbesondere also quer bzgl. der jeweiligen Längserstreckungsrichtung auf den Helikopter und die Schwimmkörper des Notschwimmsystems treffen. In der Folge fängt der Helikopter an, zu Rollen . Trifft nun eine brechende Welle auf den Helikopter mit den Schwimmkörpern, so kann er kentern, wenn nicht die Schwimmkörper für diese Szenarien optimiert sind, insbesondere wenn diese wie bisher kreiszylindrisch ausgebildet sind.

Kreiszylindrische Schwimmkörper weisen bekanntlich ein schlechtes Seeverhalten auf. Dies betrifft insbesondere die dynamische Stabilität in Wellen. Hierzu gibt es zahlreiche Untersuchungen z.B. für U-Boote.

Es ist daher eine Aufgabe der Erfindung ein Notschwimmsystem der eingangs genannter Art so zu verbessern, dass den Anforderungen der neuen Zulassungsrichtlinie entspricht und auch bei rauem Seegang eine genügende Kentersicherheit bietet. Vorzugsweise ist es eine Aufgabe, ein Notschwimmsystem bereit zu stellen, dass im Vergleich zu kreiszylindrisch ausgebildeten Schwimmkörpern bei rauer See, insbesondere also bei Wellengang gemäß Seegangstärke 6, ein verbessertes dynamisches Verhalten zeigt.

Diese Aufgabe wird erfindungsgemäß dadurch gelöst, dass die jeweiligen Schwimmkörper senkrecht zu ihrer Längserstreckungsrichtung im aufgeblasenen Zustand zwischen ihren Enden eine Querschnittsform aufweisen, die mehreckig ist. Die Aufgabe wird weiterhin gelöst durch ein Luftfahrzeug, insbesondere einen Helikopter, mit einem solchen Notschwimmsystem, insbesondere welches Schwimmkörper gemäß der Erfindung aufweist.

Vorzugsweise wird unter mehreckig im Sinne der Erfindung keine spitze Eckigkeit des Querschnitts mit gerade Kanten im mathematischen Sinne verstanden, sondern eine zumindest im Wesentlichen mehreck-artige Ausgestaltung.

Aufgrund der inneren Druckbeaufschlagung des Schwimmkörpers im aufgeblasenen Zustand können im Querschnitt betrachtet die Kanten nach außen konvex ausgebaucht sein und in den Ecken des Schwimmkörpers zwischen zwei solchen Kanten kann ein gerundeter Übergang vorhanden sein. Auch eine solche Anordnung eines Schwimmkörpers, der im Querschnitt gewölbte, insbesondere nach außen gewölbte Kanten und einen gerundeten Übergang zwischen solchen Kanten als Ecke aufweist, wird als eckig im Sinne der Erfindung verstanden.

Insbesondere ist ein gerundeter Bereich in der Querschnittsform als Ecke gegenüber gewölbten Kanten definiert, wenn der Krümmungsradius des gerundeten Bereichs kleiner ist als der Krümmungsradius einer gewölbten Kante.

Insbesondere ist weiterhin die Querschnittsform als eckig im Sinne der Erfindung zu verstehen, wenn gewölbte Kanten, die über Ecken bildende Bereiche ineinander übergehen, deren Krümmungsradius kleiner ist als der Krümmungsradius der umschließenden Kanten, durch einen gemittelt dargestellten Verlauf als Geraden approximierbar sind und sich diese approximierten Geraden schneiden. Solche Geraden umschließen vorzugsweise eine gerundete Ecke, vorzugsweise wobei der jeweilige Schnittpunkt von zwei solchen Geraden, außen von einer gerundeten Ecke liegen.

Die Erfindung erschließt den Vorteil, dass bei dynamischen Bewegungen des Notschwimmsystems in rauer See das Luftfahrzeug mit einem solchen Notschwimmsystem kenterstabiler ist als bei einem Notschwimmsystem, welches kreiszylindrische übliche Schwimmkörper aufweist.

Insbesondere wurde ermittelt, dass ein erfindungsgemäßes Notschwimmsystem einen für die dynamische Stabilität verbesserten (im Vergleich zu dem kreiszylinderförmigen Schwimmkörper gleichen Volumens) Verlauf des Rückstellmoments über dem Rollwinkel hervorruft und damit das Kentern unter den verschärften Bedingungen verhindern kann. Weiterhin weist das erfindungsgemäße Notschwimmsystem vorzugsweise in Weiterbildungen ein gutes Slamming-Verhalten bei den üblichen Notwasserlandungsbedingungen, die in der Vorschrift beschrieben sind.

Allgemein kann vorzugsweise vorgesehen sein, dass ein mehreckiger Querschnitt durch eine eckige Grundform gegeben ist, insbesondere also durch die Form von Dreieck, Viereck, vorzugsweise Rechteck, Parallelogramm, Trapez, gleichseitiges n-Eck, oder durch Formen, die aus diesen Grundformen zusammengesetzt sind. Bei aus Grundformen zusammengesetzten Querschnittsformen ist bevorzugt eine der Grundformen, vorzugsweise eine in der Nutzungslage unten liegende Grundform der Zusammensetzung ein Dreieck, Rechteck oder ein Trapez.

Vorzugsweise ist der mehreckige Querschnitt eines Schwimmkörpers (betrachtet senkrecht zur Längserstreckungsrichtung der Schwimmkörper) dreieckig oder viereckig. Dies sind konstruktiv einfach zu gestaltende Querschnittformen, welche bereits Vorteile gegenüber Kreisquerschnitten aufweisen.

Vorzugsweise ist eine erfindungsgemäß bevorzugte Querschnittsform nicht drehsymmetrisch, insbesondere wird eine erfindungsgemäße Querschnittsform also nur bei einer vollständigen Drehung um 360 Grad um einen Drehpunkt in sich selbst überführt.

Vorzugsweise weist die Querschnittsform eines Schwimmkörpers in der normalen Nutzungslage bei ruhiger Wasseroberfläche eine Orientierung auf, in welcher hinsichtlich der in horizontaler Richtung betrachteten Breite der Querschnittsform der Bereich der Querschnittsform mit geringerer, insbesondere geringster Breite untenliegend ist.

In der viereckigen Ausführung ist eine trapezförmige Ausführung des Querschnitts bevorzugt. Weiter bevorzugt ist in der trapezförmigen Ausführung des Querschnitts vorgesehen, dass die kürzere Kante von zwei sich in Höhenrichtung gegenüberliegenden Kanten untenliegend ist.

Weiter bevorzugt ist in der trapezförmigen Ausführung des Querschnitts vorgesehen, dass die sich um eine Vertikallinie herum gegenüberliegenden Kanten eines trapezförmigen Querschnitts zur Vertikallinie unterschiedlichen Winkelbetrag aufweisen. Insbesondere ist damit ein unterschiedlicher absoluter Winkelbetrag gemeint ohne Beachtung des Vorzeichens des Winkels. Durch unterschiedliche Winkel kann insbesondere die dynamische Wirkung beim Rollen unter rauen Seegangsbedingungen verbessert werden.

Eine bevorzugte Ausführung sieht es vor, dass in einer horizontal ausgerichteten Anordnung der beabstandeten Schwimmkörper in der senkrecht zur Längserstreckungsrichtung betrachteten Querschnittsform der Schwimmkörper eine außenliegende Kante, insbesondere die am weitesten außenliegende Kante des jeweiligen Querschnitts einen größeren Winkel mit der Vertikalen einschließt als eine innere Kante, insbesondere die am weitesten innen liegende Kante.

Dadurch ergibt es sich, dass die äußere Seitenfläche des Schwimmkörpers mit der Wasseroberfläche einen kleineren Winkel einschließt als die innere. Diese erfindungsgemäße Ausführung erzeugt somit im dynamischen Fall der Eintauchbewegung einen größeren Auftriebsgradienten, als dies bei einer kreiszylindrischen Ausführung des Schwimmkörpers der Fall wäre.

Alternativ oder auch kumulativ zur vorgenannten Ausführung ist es auch vorgesehen, dass die außen und oben liegende Ecke des Querschnitts höher gelegen ist, als die innen und oben gelegene Ecke des Querschnitts. Bei einer Rollbewegung kann so die außenliegende Seitenfläche des Schwimmkörpers über eine größere Eintauchtiefe Wirkung entfalten.

Beide vorgenannten Ausführungen bewirken vorteilhaft, dass um die Wasserlinie herum die in horizontaler Richtung betrachtete Breite des Querschnitts eines Schwimmkörpers nach oben hin, also mit zunehmender Eintauchtiefe zunehmend ist. Die mathematische Ableitung des verdrängten Volumens nach der Eintauchtiefe oder auch nach dem Rollwinkel ist damit für einen größeren Eintauchtiefenbereich oder auch für einen größeren Rollwinkelbereich positiv im Vergleich zu einem kreiszylindrischen Schwimmkörper.

In einer bevorzugten Ausführung sieht es die Erfindung vor, dass die Schwimmkörper in Längsrichtung zwischen ihren Enden und in Höhenrichtung zwischen einer unteren Längskante und einer oberen Längskante eine nach außen weisende Seitenfläche aufweisen. Solche Längskanten bilden in der zugehörigen Querschnittsform entsprechende obere und untere Ecken am Ende einer die Seitenfläche in der Querschnittsform repräsentierenden Seitenkante, insbesondere wobei die außen an die Seitenfläche angelegte Flächennormale von demjenigen Schwimmkörper wegweist, der diese Seitenfläche umfasst, und vorzugsweise auch von jedem anderen Schwimmkörper des Systems wegweist.

Die Wasserlinie liegt vorzugsweise bei Belastung des Systems durch das Gewicht eines Luftfahrzeugs und ruhigem Wasser in der Seitenfläche, bzw. zwischen der unteren und oberen Längskante dieser Seitenfläche bzw. schneidet im Querschnitt betrachtet die Seitenkante.

Nach außen bedeutet dabei in dieser oder auch anderen Ausführungen vorzugsweise von dem Notschwimmsystem weg, vorzugsweise in einer Richtung parallel zur Beabstandung der Schwimmkörper.

In einer Richtung von außen auf das Notschwimmsystem blickend (insbesondere in horizontaler Richtung blickend) ist somit vorzugsweise zwischen einer oberen und unteren Längskante des Schwimmkörpers, eine idealisiert als plan angenommene, ggfs. technisch bedingt gewölbte Seitenfläche erkennbar, insbesondere deren Wölbung aber kleiner ist als bei einem kreiszylindrischen Schwimmkörper desselben Schwimmkörpervolumens.

Dies hat den Vorteil, dass diese Seitenfläche brechenden Wellen ausgesetzt ist und einer brechenden Welle eine hohe Flächengröße entgegensetzt, die dazu führt, dass eine Welle das Notschwimmsystem eher horizontal vor sich herschiebt, statt es in eine Rollbewegung zu versetzen oder diese zu verstärken.

Ein Vorteil dieser Ausführung im Vergleich zu einem im Querschnitt kreisrunden Schwimmkörper ist es vorzugsweise, dass aufgrund der Seitenfläche, insbesondere der idealisiert als plan angenommenen Seitenfläche, die Kraft, die eine auf den Schwimmkörper einbrechende Welle auf den Schwimmkörper mittelbar verteilt über die Seitenfläche ausübt, immer auch in eine horizontale Kraftkomponente aufgespalten wird, die größer ist als bei einem kreisrunden Querschnitt, was bewirkt, dass der Schwimmkörper des erfindungsgemäßen Systems zusammen mit dem getragenen Luftfahrzeug stärker als bei bisherigen Schwimmkörpern horizontal vor der Welle hergeschoben wird, unabhängig davon, in welcher Richtung die Welle auf den Schwimmkörper einfällt.

Vorzugsweise wird bewirkt, dass durch die Seitenfläche der Angriffspunkt der wellen-induzierten horizontalen Kraft tiefer liegt, im Vergleich zum kreiszylindrischen Schwimmkörper mit demselben Volumen, wodurch das Rollmoment kleiner wird.

Bei einem kreisförmigen Querschnitt hingegen wirkt die wellen-induzierte horizontale Kraft größtenteils auf die Fläche des Luftfahrzeuges oberhalb der Schwimmkörper, wodurch der Angriffspunkt dieser Kraft weiter oben liegt. Dadurch ist das Stoßrollmoment größer. Mit der erfindungsgemäßen Ausführung hingegen wird dieser Nachteil überwunden.

Besonders bevorzugt ist dabei vorgesehen, wenn die untere und obere Längskante der Seitenfläche auf der Außenseite des Schwimmkörpers die unterste und oberste Längskante des Schwimmkörpers bilden.

Vorzugsweise wird damit erzielt, dass der jeweils betrachtete Schwimmkörper, insbesondere bei Betrachtung des Schwimmkörpers von außen in horizontaler Richtung, außenseitig nur eine einzige Seitenfläche aufweist. Insbesondere kennzeichnet "außenseitig" hierbei die vom Luftfahrzeug und/oder allen Schwimmkörpern wegweisende Seite einer vorzugsweise mittig durch den Schwimmkörper gelegten Vertikalebene, welche parallel zur Längsrichtung des Schwimmkörpers liegt.

Vorzugsweise ist diese genannte Seitenfläche vertikal ausgerichtet oder gegenüber einer Vertikalebene, welche parallel zur Längserstreckungsrichtung ist, nach außen und unten geneigt. Insbesondere hat damit die Seitenfläche bei einem am Luftfahrzeug montierten System einen Normalenvektor, der die Wasseroberfläche schneidet und der eine nach außen weisende Komponente hat.

Die genannten Ausrichtungen sind dabei vorzugsweise wiederum als gegeben anzusehen, wenn das System mit einem Luftfahrzeug auf ruhiger Wasseroberfläche schwimmt. Hierdurch ergibt sich weiterhin der Vorteil, dass durch ein Rollen des Luftfahrzeuges eine solche sich gegenüber der Wasseroberfläche erhebende Seitenfläche in Richtung zur Vertikalebene rotiert wird, wodurch die effektive Oberfläche, welche einer auf die Seitenfläche einlaufenden Welle entgegengestellt wird, durch das Rollen vergrößert wird gegenüber einer Lage des Systems bei ruhiger Wasseroberfläche. Die beschriebene positive Wirkung des Schwimmkörpers hinsichtlich der genannten horizontalen Schubbewegung durch eine einlaufende Welle wird im dynamischen Fall bei rauer See somit verbessert.

In allen möglichen Ausführungsformen, bzw. Querschnittsformen der Schwimmkörper sind solche bevorzugt, bei denen es sich ergibt, dass das Integral des Rückstellmoments über dem Rollwinkel größer ist als das gleiche Integral bei einem System mit Schwimmkörpern desselben Volumens und einer Kreisquerschnittform zwischen den Enden. Dies gilt vorzugsweise zumindest in einem vorbestimmten Rollwinkelbereich von 0 bis 20 Grad, vorzugsweise 0 bis 30 Grad, vorzugsweise 0 bis 40 Grad, weiter bevorzugt 0 bis 50 Grad.

In allen möglichen Ausführungsformen, bzw. Querschnittsformen der Schwimmkörper sind weiterhin solche bevorzugt, bei denen es sich ergibt, dass das Rückstellmoment größer ist als bei einem System mit Schwimmkörpern desselben Volumens und einer Kreisquerschnittform zwischen den Enden, insbesondere wobei das Rückstellmoment bei einem Rollwinkel maximal ist, der größer ist als bei einem System mit Schwimmkörpern desselben Volumens und einer Kreisquerschnittform zwischen den Enden. Dies gilt vorzugsweise zumindest in einem vorbestimmten Rollwinkelbereich von 0 bis 20 Grad, vorzugsweise 0 bis 30 Grad, vorzugsweise 0 bis 40 Grad, weiter bevorzugt 0 bis 50 Grad.

Insbesondere die vorangehend definierten Querschnittsformen, insbesondere auch die nachfolgend definierten erfüllen eines oder bevorzugt alle dieser Kriterien.

Vorzugsweise ist es vorgesehen, dass der jeweilige Schwimmkörper in einem Bereich oberhalb der Körpermitte eine in horizontaler Richtung und senkrecht zur Längserstreckungsrichtung betrachtete Breite aufweist, die größer ist als die Breite in der Schwimmkörpermitte.

Vorzugsweise ist es alternativ oder auch kumulativ zu zuvor genannten Ausführungen vorgesehen, dass die in horizontaler Richtung betrachtete Breite der Querschnittsform eines Schwimmkörpers mit einem gegebenen Volumen von unten nach oben über eine größere Höhe zunehmend ist, als bei einem Schwimmkörper mit Kreisquerschnitt desselben gegebenen Volumens.

Dadurch ergibt sich wiederum die Wirkung, dass die mathematische Ableitung der Wasserverdrängung nach der Eintauchtiefe (dV/dz) für ein größeres Intervall von z positiv ist im Vergleich zur kreiszylindrischen Schwimmkörperform.

Vorteilhaft ist auch hierdurch wiederum die Ableitung der Wasserverdrängung nach dem Rollwinkel bei einem erfindungsgemäßen Schwimmkörper (dem weiter eintauchenden) für einen größeren Rollwinkelbereich positiv im Vergleich zum kreiszylindrischen Schwimmkörper, insbesondere positiv für Rollwinkel bis mindestens 20 Grad, weiter bevorzugt bis mindestens 25 Grad, weiter bevorzugt bis mindestens 30 Grad, noch weiter bevorzugt bis mindestens 35 Grad positiv.

Bevorzugt ist vorgesehen, dass die Breite der Querschnittsform über mehr als 55%, vorzugsweise mehr als 60%, vorzugsweise mehr als 70%, vorzugsweise mehr als 80 %, weiter bevorzugt mehr als 90 % der Gesamthöhe der jeweiligen Querschnittsform zunehmend ist.

Demgegenüber ist bei einem Schwimmkörper mit Kreisquerschnittsform die Breite in der Richtung von unten nach oben genau nur über 50% der Gesamthöhe zunehmend, nämlich bis zur horizontalen Mittelebene des Schwimmkörpers und danach wieder abnehmend.

Weiter bevorzugt ist es vorgesehen, dass in Rollzuständen, in denen die beabstandeten Schwimmkörper um eine mittig zwischen diesen und parallel zur Längserstreckung liegenden Rollachse um einen Rollwinkel aus der horizontalen Lage verkippt sind, das Querschnittsmaß der senkrecht zur Längserstreckung betrachteten Querschnittsform eines der Schwimmkörper in der die Rollachse umfassenden Horizontalebene oder in der Ebene der Wasserlinie für zunehmende Rollwinkel in einem Winkelbereich von 0 Grad bis mindestens 20 Grad, vorzugsweise 0 Grad bis mindestens 25 Grad, weiter bevorzugt 0 Grad bis mindestens 30 Grad, noch weiter bevorzugt 0 Grad bis mindestens 35 Grad zunehmend ist.

Eine konstruktiv bevorzugte Weiterbildung sieht es vor, dass die Menge aller Schwimmkörper zwei Gruppen von Schwimmkörpern bildet, wobei die zwei Gruppen quer, insbesondere senkrecht zur Längserstreckungsrichtung der Schwimmkörper beabstandet sind und jede Gruppe von Schwimmkörpern wenigstens zwei in der Längserstreckungsrichtung der Schwimmkörper hintereinander angeordnete Schwimmkörper umfasst. Hierdurch kann der Auftrieb im vorderen und hinteren Bereich eines Luftfahrzeuges unterschiedlich eingestellt sein. Weiterhin ergibt sich dadurch auch eine Redundanz bei den Schwimmkörpern.

Vorzugsweise können in einer solchen Ausführung die senkrecht zur Längserstreckungsrichtung betrachteten Querschnitte der Schwimmkörper derselben Gruppe gleiche Eckanzahl aufweisen, insbesondere aber formverschieden sein. Vorzugsweise ist die Querschnittsfläche der in Flugrichtung hinteren Schwimmkörper größer ist als die Querschnittsfläche der in Flugrichtung vorderen Schwimmkörper. Dabei kann auch vorgesehen sein, dass die hinteren Schwimmkörper eine größere Eintauchtiefe haben als die vorderen.

Eine mit allen möglichen Ausführungen kombinierbare Weiterbildung sieht es vorzugsweise vor, dass ein Ende des Schwimmkörpers, insbesondere ein in Flugrichtung vorne liegendes Ende eines Schwimmkörpers, insbesondere eines in einer genannten Gruppe in Flugrichtung vorne liegenden Schwimmkörpers, eine vom Schwimmkörper vorspringende Spitze, insbesondere in Flugrichtung vorspringende Spitze bildet.

Eine solche Spitze kann z.B. als Pyramide ausgebildet sein, insbesondere mit einer Pyramidengrundfläche, die der Querschnittsform des Schwimmkörpers zwischen seinen Enden entspricht und mit einer von der Grundfläche in Flugrichtung vorspringenden Pyramidenspitze.

Auch hier ist wie zuvor der Körper der Pyramide nicht in seiner mathematischen Exaktheit zu verstehen, sondern vorzugsweise als ein im Wesentlichen pyramidenartiger Körper mit ausgebauchten Oberflächen und gerundeten Ecken.

Durch die spitze Ausbildung werden die Stoßlasten (Slamming) reduziert und die Aerodynamik vor dem Notwassern verbessert. Vorzugsweise ist vorgesehen, dass der die Spitze, insbesondere die Pyramide bildende Teil des Schwimmkörpers einen aufblasbaren Teilschwimmkörper des Schwimmkörpers bildet, der ein vom restlichen Teil des Schwimmkörpers getrenntes Volumen aufweist.

Allgemein kann die Erfindung vorsehen, dass ein jeweiliger Schwimmkörper mehrere aufblasbare Teilschwimmkörper umfasst. In einem solchen Fall können die Teilschwimmkörper Kammern bilden, die alle innerhalb einer äußeren Hülle des Schwimmkörpers enthalten sein, welche die beschriebenen Querschnittsformen hat. Alternativ können die einzelnen Teilschwimmkörper ohne äußere Hülle ausgebildet sein. In diesem Fall entspricht vorzugsweise eine gedachte Hülle um die Teilschwimmkörper der Querschnittsform, wie sie zuvor beschrieben ist.

Eine weiterhin bevorzugte Ausführung sieht es vor, dass ein jeweiliger Schwimmkörper Versteifungsstrukturen und/oder Formgebungsstrukturen aufweist, insbesondere entlang der Kanten und/oder entlang der Seitenflächen des Schwimmkörpers. Vorzugsweise kann ein jeweiliger Schwimmkörper in dessen Inneren verlaufende Streben und/oder Seile und/oder Innenflächen und/oder Verstärkungsnähte aufweisen.

So kann erfindungsgemäß der aufgeblasene Schwimmkörper in die gewünschte äußere Querschnittsform gezwungen werden oder eine technisch nicht vermeidbare Auswölbung von Seitenflächen (bzw. im Querschnitt von Kanten) oder nicht vermeidbare Rundung von Längskanten bzw. im Querschnitt von Ecken reduziert werden.

Z.B. kann vorgesehen sein, dass die Versteifungsstrukturen und/oder Formgebungsstrukturen in nicht aufgeblasenem Zustand des jeweiligen Schwimmkörpers in einem kollabierten, insbesondere gefalteten Zustand vorliegen und im aufgeblasenen Zustand in einem expandierten Zustand, insbesondere entfaltetem Zustand vorliegen.

Das Aufblasen kann in allen möglichen Ausführungen z.B. aus einem im System bzw. dem Luftfahrzeug mitgeführten Gasvorrat erfolgen.

Beispielsweise können Versteifungsstreben oder Formgebungsstreben aus jeweils wenigstes zwei oder mehr Teilstreben gebildet sein, welche eine selbstarretierende Gelenkverbindung aufweisen. Durch die Bewegung der Teilstreben beim Vorgang des Aufblasens eines Schwimmkörpers können diese eine Lage einnehmen, in welcher die automatische Arretierung der Gelenkverbindung erzeugt wird. Ab diesem Zustand bilden die Streben Strukturen, welche die Form des Schwimmkörpers definieren und/oder versteifen.

Formgebungsstrukturen können z.B. auch durch eine Seilanordnung oder Innenflächenanordnung gebildet werden, in welcher im expandierten Zustand mehrere Seilstücke / Innenflächen mit einem Ende an Flächen und/oder Kantenbereichen oder anderen Versteifungsstrukturen/ Formgebungsstrukturen des Schwimmkörpers befestigt sind, insbesondere in Umfangsrichtung entlang der Querschnittsform, befestigt sind und mit einem anderen Ende in einem gemeinsamen Befestigungsbereich untereinander verbunden sind. Solche Seilstücke / Innenflächen einer im Inneren des Querschnitts liegenden Seilanordnung / Innenflächenanordnung begrenzen somit ebenfalls die Ausbreitungsmöglichkeit von Seitenflächen und/oder Längskanten des Schwimmkörpers beim Aufblasen.

Bei einem Luftfahrzeug mit einem solchen Notschwimmsystem kann eine mögliche Weiterbildung auch vorsehen, dass die Lage des Notschwimmsystems zum Luftfahrzeug änderbar ist, insbesondere während des Fluges, vorzugsweise das Notschwimmsystems relativ zum Luftfahrzeug um eine Vertikalachse rotierbar ist. Sofern ein Luftfahrzeug, wie z.B. ein Helikopter, sich bei einem unvermeidbaren Absturz nicht exakt im Geradeausflug der Wasseroberfläche nähert, kann so das Notschwimmsystem ausgerichtet werden, damit die Längsrichtung der Schwimmkörper mit der Absturzrichtung übereinstimmt.

Ausführungen der Erfindung werden nachfolgend anhand der Figuren beschrieben.

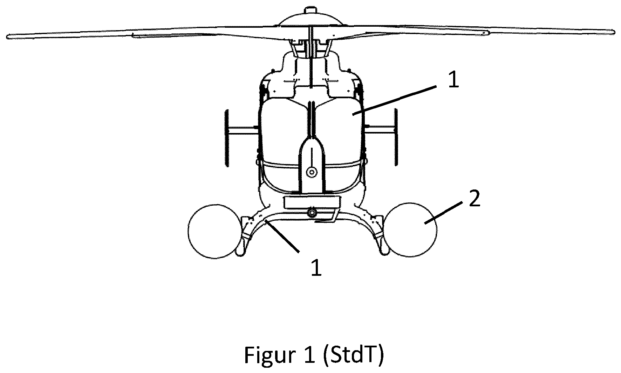

Die Figur 1 zeigt als Vergleich mit der Erfindung ein Notschwimmsystem gemäß dem bisherigen Stand der Technik an einem Helikopter als Beispiel eines Luftfahrzeugs 1. Das Notschwimmsystem umfasst hier zwei Schwimmkörper 2, die in horizontaler Richtung beabstandet am Landegestell 1a des Luftfahrzeugs 1 befestigt sind. Hierbei ist es vorgesehen, dass die Schwimmkörper 2 des Systems während des normalen Flugbetriebs in einem nicht aufgeblasenen Zustand mitgeführt werden und z.B. nur im Notfall die Schwimmkörper 2 aufgeblasen werden, wenn das Luftfahrzeug 1 auf dem Wasser notlanden muss. In diesem Fall ist vorgesehen, dass die Schwimmkörper 2 des Systems dem Luftfahrzeug 1 genügend Auftrieb geben, damit dieses sicher schwimmt. Diese Merkmale des Standes der Technik treffen auch auf die nachfolgend beschriebene Erfindung zu.

Im bekannten Stand der Technik sind die Schwimmkörper2 - wie dargestellt - als kreiszylindrische längserstreckte Körper ausgebildet und haben somit im Querschnitt senkrecht zur Längsachse betrachtet - wie es Figur 1 zeigt - eine Kreisform.

Zwar verleihen solche Schwimmkörper 2 im ruhigen Wasser genügend Auftrieb, in Wellen, die zu einem Rollen des Luftfahrzeugs 1 führen, erzeugen diese Art der Schwimmkörper 2 jedoch nicht genügend Rückstellenergie, um ein Kentern des Luftfahrzeuges 1 zu verhindern.

Ab einer Eintauchtiefe von 50% der Gesamthöhe des Schwimmkörpers 2 nimmt der Auftrieb zwar noch absolut betrachtet zu, die mathematische Ableitung der Wasserverdrängung ist aber ab einem Rollwinkel, welcher den eintauchenden Schwimmkörper zu mehr als 50% seiner Gesamthöhe unter Wasser drückt, negativ, insbesondere was bedeutet, dass die relative Zunahme des Auftriebs und damit die relative Zunahme eines dadurch bewirkten Rückstellmomentes ab 50 % Eintauchtiefe negativ wird. In Wellen, insbesondere bei Seegangstärke 6 kann ein Kentern somit nicht wirksam verhindert werden, weil die Schwimmkörper im Sinne der dynamischen Stabilität ein vergleichsweise eher negatives Verhalten aufweisen.

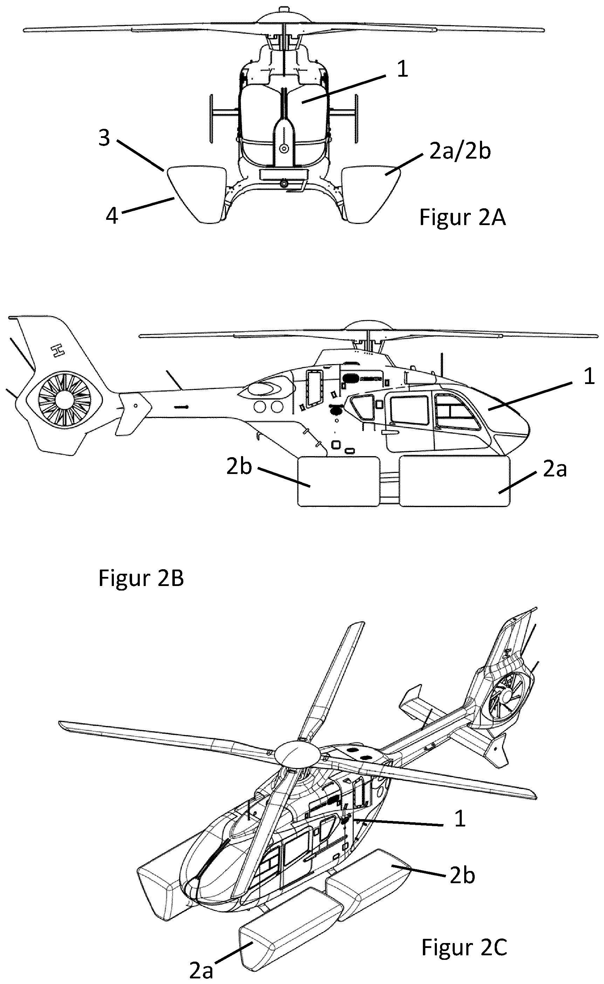

Die Figuren 2A bis 2C zeigen in verschiedenen Ansichten eine erste mögliche Ausführung eines erfindungsgemäßen Notschwimmsystems mit Schwimmkörpern 2 an einem Helikopter als Luftfahrzeug 1.

Die Schwimmkörper 2 sind wiederum in horizontaler Richtung beabstandet und bilden beidseits einer Vertikalebene durch den Helikopter, insbesondere welche die Längsachse des Helikopters umfasst, Gruppen von jeweils zwei Schwimmkörpern 2a und 2b, die in der Richtung der Längserstreckung der Schwimmkörper 2a/2b bzw. in der Richtung der Längsachse des Luftfahrzeugs 1 hintereinander angeordnet sind, insbesondere mit einem Abstand.

Die Anordnung kann in allen möglichen Ausführungen, insbesondere solchen die nachfolgend noch gezeigt werden, auf diese Weise erfolgen, ebenso aber auch ohne Abstand zwischen den Schwimmkörpern 2a, 2b einer Gruppe und/oder auch mit mehr als zwei Schwimmkörpern und/oder auch mit nur einem Schwimmkörper auf jeder Seite der Vertikalebene, bzw. an jeder Kufe des Landegestells.

In dieser ersten erfindungsgemäßen Ausführung haben die Schwimmkörper 2a, 2b einen viereckigen Querschnitt betrachtet senkrecht zur Längserstreckungsrichtung der Schwimmkörper 2a, 2b zwischen deren jeweiligen Enden.

Dabei zeigen die Abbildungen der Figuren 1A-1C, dass viereckig nicht im mathematischen Sinn zu verstehen ist, denn die vier Ecken 3 sind jeweils gerundet und die Kanten 4 nach außen ausgewölbt. Dies ergibt sich zum einen fertigungstechnisch und/oder durch die innere Druckbeaufschlagung des jeweiligen Schwimmkörpers 2a, 2b mit einem Füllgas.

In dieser Ausführung ist die viereckige Querschnittsform trapezförmig ausgebildet, wobei der Teil der Querschnittsform mit der in horizontaler Richtung geringeren Breite untenliegend ist, bzw. von den zwei in Höhenrichtung beabstandeten Kanten 4 liegt die kürzere unten.

Die Querschnittsform ist weiterhin so, dass die in horizontaler Richtung beabstandeten Seitenflächen / Kanten 4 unterschiedlichen Winkelbetrag zur Vertikalen oder auch zur Horizontalen haben.

Insbesondere nimmt dadurch die außenliegende Seitenfläche zur Horizontalebene, die auch der Wasserlinie entspricht, einen kleineren Winkel ein als die innenliegende Seitenfläche / Kante. Bei einer Rollbewegung weist so die außenliegende Fläche beim Eintauchen in das Wasser der Eintauchbewegung einen größeren Auftriebsgradienten auf, als dies bei einer kreiszylindrischen Außenfläche der Fall ist, die nahezu tangential zur Mantelfläche eintaucht.

Bei einer dynamischen Rollbewegung der Schwimmkörper 2 bei bewegter Wasseroberfläche wird so ein erfindungsgemäßes Notschwimmsystem einen über den reinen Auftrieb hinausgehenden Vorteil erzielen, der zu einem größeren Rückstellmoment führt als dies bei einem kreiszylindrischen Schwimmkörper mit demselben Volumen der Fall wäre.

Hingegen wird derselbe Schwimmkörper 2 bei einer auftauchenden Bewegung die äußere Seitenfläche / Kante 4 in Richtung der Vertikalen drehen, so dass sich die effektiv gegen eine seitlich einlaufende Welle gerichtete Seitenfläche durch das Rollen vergrößert und so erzielt wird, dass die einlaufende Welle eine seitlich horizontale schiebende Wirkung auf das Notschwimmsystem ausübt, statt den Schwimmkörper hinabzudrücken und das Rollen zu verstärken. So hat dieser erfindungsgemäß geformte Schwimmkörper beim Rollen sowohl in der eintauchenden Phase als auch in der auftauchenden Phase deutliche Vorteile gegenüber einem kreiszylindrischen Schwimmkörper desselben Volumens.

In den Darstellungen der Figuren 2 weisen die Schwimmkörper frontseitig, also in Flugrichtung vorne flache Stirnflächen auf.

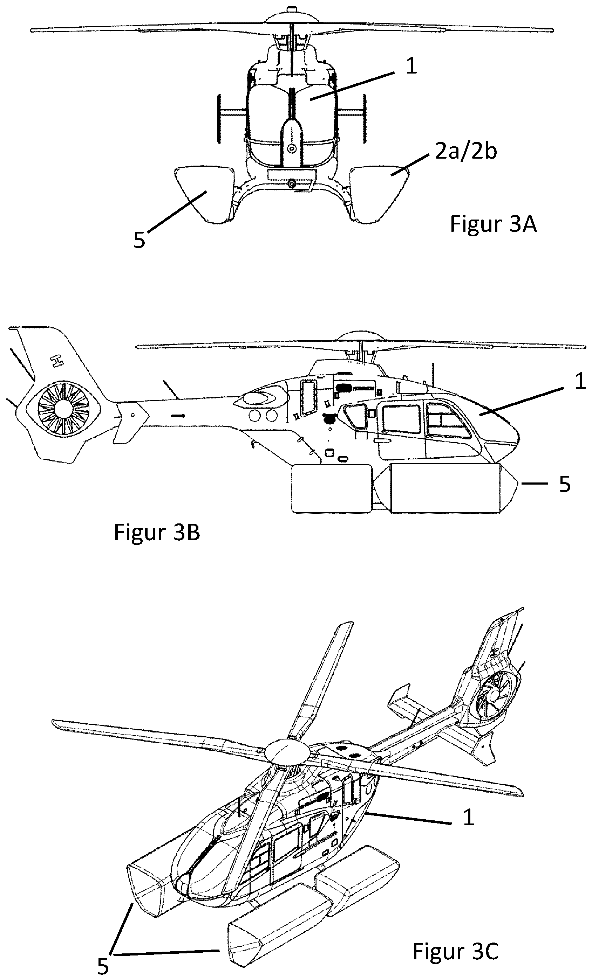

Demgegenüber zeigen die Figuren 3A bis 3C bei ansonsten gleichen Merkmalen wie zu den Figuren 2 beschrieben, dass die in Flugrichtung vorne liegenden Enden der Schwimmkörper 2a, eine in Flugrichtung vorspringende Spitze 5 aufweisen, die hier in dieser Ausführung gebildet ist durch eine Pyramidenform, deren Grundfläche der Querschnittsform des Schwimmkörpers 2a zwischen den Enden entspricht. Auch die Pyramidenform ist mit gerundeter Spitze bzw. Kanten ausgebildet, so dass auch diese Pyramidenform nicht streng mathematisch zu verstehen ist.

Dieses spitze Zulaufen des in Flugrichtung vorne liegenden Endes begünstigt im Fall des Absturzes ein verbessertes Aufsetzen auf die Wasseroberfläche, verbunden mit geringen Stoßlasten und bessere Aerodynamik, im Vergleich zur flachen Stirnfläche der Figuren 2.

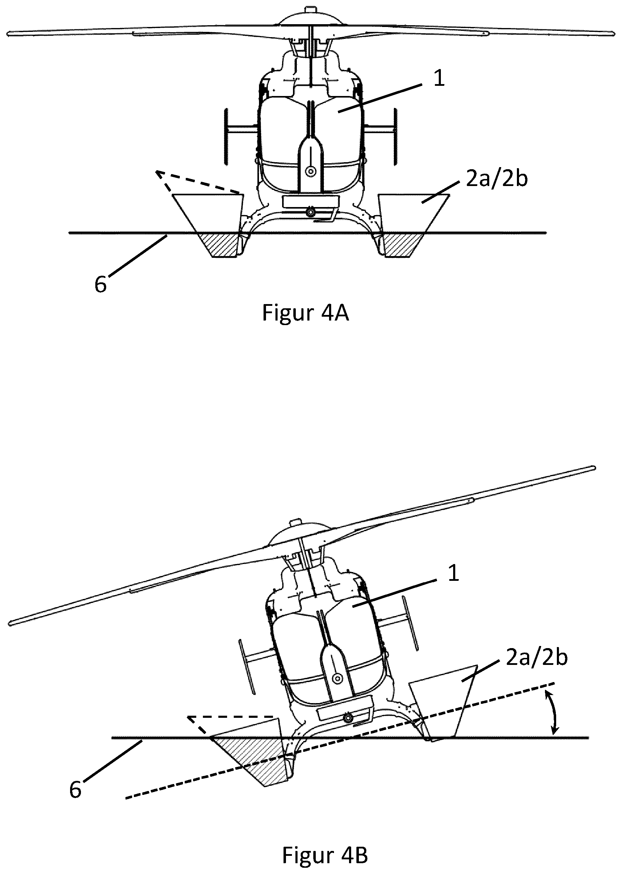

Die Figuren 4A und 4B zeigen die Situation bei ruhiger Wasseroberfläche, wenn die Schwimmkörper 2a, 2b gemäß Figur 4A in einer Horizontalanordnung nebeneinanderliegend sind und gemäß Figur 4B, wenn das Luftfahrzeug 1 um einen Rollwinkel aus der horizontalen Lage herausgekippt ist, so dass der hier links dargestellte Schwimmköper 2a, 2b in das Wasser eintaucht.

Anhand der Wasserlinie 6 und des im Querschnitt dargestellten schraffiert verdrängten Wassers werden weitere Vorteile des erfindungsgemäßen Notschwimmsystems deutlich.

So ist hier erkennbar, dass um die Wasserlinie 6 herum, insbesondere über eine Höhe oberhalb der Wasserlinie 6, die mindestens der Höhe unterhalb der Wasserlinie 6 im Fall der Figur 4A der ruhigen Wasseroberfläche / Rollwinkel Null Grad entspricht, die in horizontaler Richtung betrachtete Breite der Querschnittsform zunehmend ist. Vorzugsweise gilt dies nicht nur für die hier gezeigte Querschnittsform, sondern für alle erfindungsgemäß möglichen Querschnittsformen.

Die Breite ist hier zunehmend bis zum Rollwinkel, der in Figur 4B dargestellt ist, insbesondere ein Rollwinkel von mindestens 20 Grad. Bei diesem Rollwinkel wäre die horizontale Breite eines im Querschnitt kreisförmigen Schwimmkörpers der Figur 1 ab einem Eintauchen von mehr als 50% seiner Gesamthöhe abnehmend.

Diese Breitenzunahme bis zu einem maximalen Rollwinkel, der größer ist als bei einem Schwimmkörper gleichen Volumens mit Kreisquerschnitt bewirkt, dass die mathematische Ableitung der Wasserverdrängung oder auch des Rückstellmomentes nach der Eintauchtiefe oder auch nach dem Rollwinkel bis zu einem größeren Rollwinkel im Vergleich zum Schwimmkörper gleichen Volumens mit Kreisquerschnitt größer ist und/oder positiv ist. Insgesamt erzielt damit die Erfindung auch eine vergleichsweise größere Rückstellarbeit (Integral des Rückstellmoments über dem Rollwinkel), was die Vorteile der Erfindung verdeutlicht.

Durch die gestrichelt dargestellte optionale Ausführung, in welcher die äußere obere Ecke bzw. Längskante eines Schwimmkörpers 2a/2b in der Horizontallage der Figur 4A über die innere obere Ecke / Längskante angehoben ist, kann der maximale Rollwinkel noch deutlich über den angehoben werden, der in Figur 4B gezeigt ist, ohne das Volumen des Schwimmkörpers 2a, 2b wesentlich erhöhen zu müssen.

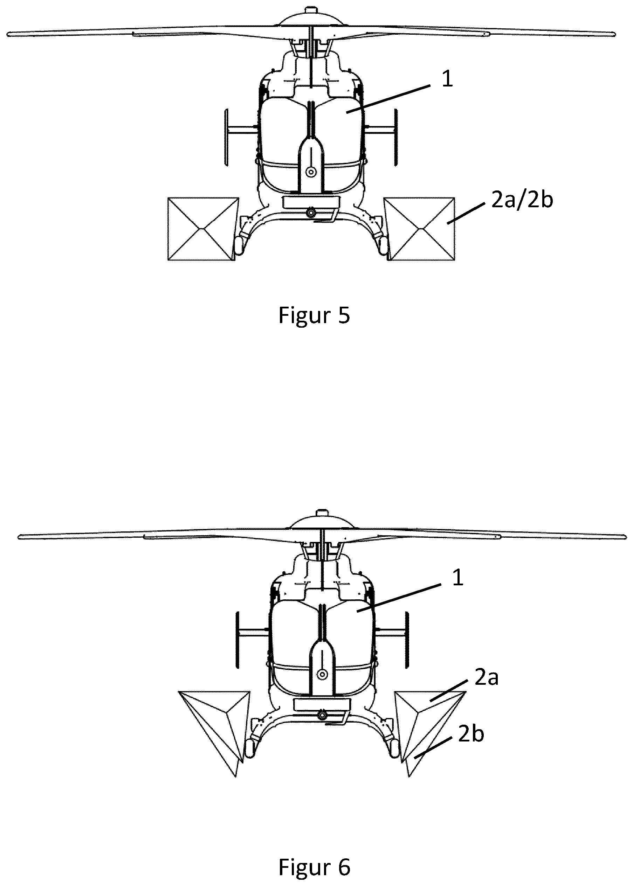

Die Figur 5 zeigt eine weitere alternative Ausgestaltung der Schwimmkörper 2a, 2b. In dieser Ausführung ist die Querschnittsform ebenso viereckig, mit unterschiedlichen Neigungswinkeln der horizontal beabstandeten Seitenflächen / Kanten 4. Die Querschnittsform ist hier mathematisch vereinfacht, d.h. mit spitzen Ecken und geraden Kanten dargestellt und entspricht einem Trapez, welches an ein Quadrat angenähert ist. Die kürzere der sich vertikal gegenüberliegenden Kanten liegt hier wiederum unten. Selbst eine Quadratform mit vertikalen und horizontalen Kanten würde die beschriebenen Vorteile gegenüber der Kreisquerschnittsform erzeugen. Auch hier sind die Frontenden der Schwimmkörper 2a, 2b bevorzugt spitz zulaufend.

Die Figur 6 zeigt eine weitere alternative Ausgestaltung der Schwimmkörper 2a, 2b. In dieser Ausführung ist die Querschnittsform dreieckig, wodurch sich ebenso unterschiedliche Neigungswinkel der horizontal beabstandeten Seitenflächen / Kanten 4 ergeben, weil die Dreiecksform mit der Spitze nach unten orientiert ist. Die Querschnittsform ist hier mathematisch vereinfacht, d.h. mit spitzen Ecken und geraden Kanten dargestellt. Auch mit dieser Form werden die beschriebenen Vorteile gegenüber der Kreisquerschnittsform erzeugt. Auch hier sind die Frontenden der Schwimmkörper 2a, 2b bevorzugt spitz zulaufend.

Weiterhin zeigt die Figur 6, dass die hinteren Schwimmkörper 2b eine andere Querschnittsgröße haben können als die vorderen Schwimmkörpers 2a, insbesondere eine größere, insbesondere auch tiefer eintauchend angeordnet sind bei gleicher Eckanzahl der Querschnittsform.

Dies gilt nicht nur für einen dreieckigen Querschnitt, sondern kann bei jeder Querschnittsform vorgesehen sein, die erfindungsgemäß möglich ist.

Auch wenn es nicht gezeigt ist, kann die Erfindung in allen möglichen Ausführungen vorsehen, dass die Querschnitte von vorderem und hinterem Schwimmkörper auch hinsichtlich der Eckenanzahl verschieden sein können.

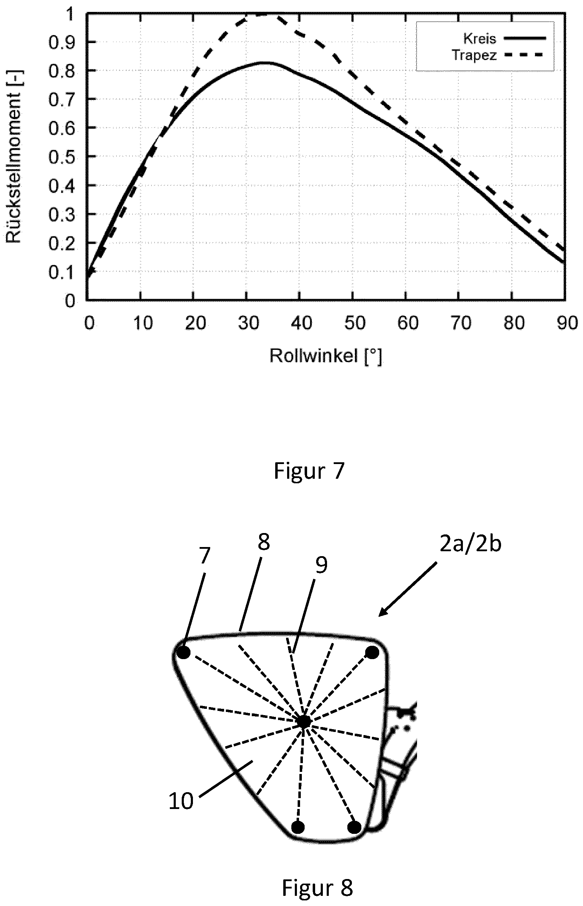

Die Figur 7 zeigt einen Vergleich der in Abhängigkeit der Rollwinkel erzeugten Rückstellmomente bei zwei verschiedenen Schwimmkörpern mit gleichen Volumen, hier bei einem erfindungsgemäßen trapezförmigen Querschnitt (gestrichelte Linie) im Vergleich zum Kreisquerschnitt (durchgezogene Linie). Es zeigt sich, dass mit der Erfindung ein deutlich größeres Rückstellmoment erzeugt werden kann. Die Erfindung kann vorzugsweise auch bewirken, dass das Maximum des Rückstellmoments nicht nur absolut größer ist, sondern auch bei einem höheren Rollwinkel erzeugt wird im Vergleich zum Kreisquerschnitt. Die Darstellung verdeutlicht weiterhin, dass das Integral des Rückstellmoments über dem Rollwinkel bei der Erfindung größer ist.

Die Figur 8 verdeutlicht an einem Querschnitt des Schwimmkörpers 2 der Figuren 2 eine Möglichkeit, die gewünschte möglichst eckige Querschnittsform mit zumindest im Wesentlichen geraden Kanten zu erzwingen. Hierzu weist der Schwimmkörper in seinem Inneren Formgebungsstrukturen und/oder Versteifungsstrukturen auf. Diese sind hier vorzugsweise durch in Längsrichtung verlaufende Streben 7 gegeben, die vorzugsweise in den zu definierenden Längskanten liegen.

Die relative Lage der Streben 7 und von Bereichen 8 in den Seitenflächen zueinander kann durch die gestrichelt dargestellten Seilabschnitte 9 erzielt werden, die von einem gemeinsamen Befestigungsbereich, der durch eine Strebe, die entlang der Längsrichtung verläuft, gegeben sein kann oder auch durch ein in Längsrichtung erstreckten weiteren Seilabschnitt, in Richtung nach außen zur den Streben 7 oder Seitenflächenbereichen 8 mit formdefinierender Länge erstreckt sind. Eine solche Formgebungsstruktur ist kollabierbar und definiert auf konstruktiv einfache Weise die Form im aufgeblasenen Zustand des Schwimmkörpers 2a, 2b, weil durch die Seilabschnitte 9 die Ausdehnung des Schwimmkörpers 2a, 2b nach außen hin beschränkt wird.

Die so erzielte Formgebung und/oder Versteifungsstruktur kann vorzugsweise vollständig im Inneren eines Schwimmkörpers angeordnet sein.

Die Formgebungsstrukturen, insbesondere hier die Linien 9 können alternativ auch in Längsrichtung und vom gemeinsamen Befestigungsbereich nach radial außen erstreckte Innenflächen des Schwimmkörpers darstellen, die am radial außenliegenden Ende an den Seitenflächen und/oder Längskanten und/oder Streben 7 befestigt sind und am anderen radialen Ende in einem gemeinsamen Befestigungsbereich untereinander verbunden sind, durch welche einzelne in Längsrichtung erstreckte aufblasbare Kammern 10 gegeneinander abgegrenzt werden. Diese Ausführung hat identische formgebende Wirkung und erzeugt eine größere Ausfallsicherheit des Schwimmkörpers.

## Patentansprüche

1. Notschwimmsystem für Luftfahrzeuge (1), insbesondere welches an dem Landegestell oder dem Rumpf eines Helikopters befestigbar ist, umfassend wenigstens zwei aufblasbare Schwimmkörper (2, 2a, 2b), die jeweils in einer Längserstreckungsrichtung erstreckt sind und die in einer horizontalen Richtung quer, insbesondere senkrecht zur Längserstreckungsrichtung beabstandet sind, **dadurch gekennzeichnet, dass** die jeweiligen Schwimmkörper (2, 2a, 2b) senkrecht zu ihrer Längserstreckungsrichtung im aufgeblasenen Zustand zwischen ihren Enden eine Querschnittsform aufweisen, die mehreckig ist.

2. System nach Anspruch 1, **dadurch gekennzeichnet, dass** die Querschnittsform dreieckig oder viereckig ist, vorzugsweise trapezförmig ist, weiter bevorzugt wobei die sich um eine Vertikallinie herum gegenüberliegenden Kanten (4) eines trapezförmigen Querschnittes zur Vertikallinie unterschiedlichen Winkelbetrag aufweisen.

3. System nach einem der vorherigen Ansprüche, insbesondere nach Anspruch 2, **dadurch gekennzeichnet, dass** in einer horizontal ausgerichteten Anordnung der beabstandeten Schwimmkörper (2, 2a, 2b) in der senkrecht zur Längserstreckungsrichtung betrachteten Querschnittsform der Schwimmkörper (2, 2a, 2b)
a. eine außenliegende Kante (4), insbesondere die am weitesten außenliegende Kante (4) des jeweiligen Querschnitts einen größeren Winkel mit der Vertikalen einschließt als eine innere Kante (4), insbesondere die am weitesten innen liegende Kante (4) und/oder
b. die außen und oben liegende Ecke (3) des Querschnitts höher gelegen ist, als die innen und oben gelegene Ecke (3) des Querschnitts.

4. System nach einem der vorherigen Ansprüche, **dadurch gekennzeichnet, dass** die Schwimmkörper (2, 2a, 2b) in Längserstreckungsrichtung zwischen ihren Enden und in Höhenrichtung zwischen einer unteren Längskante und einer oberen Längskante eine nach außen weisende Seitenfläche aufweisen, insbesondere wobei im Fall der Belastung des Systems durch ein Luftfahrzeug (1) die Wasserlinie zwischen der unteren und oberen Längskante dieser Seitenfläche liegt.

5. System nach Anspruch 4, **dadurch gekennzeichnet, dass** die untere und obere Längskante der Seitenfläche auf der Außenseite des Schwimmkörpers (2, 2a, 2b) die unterste und oberste Längskante des Schwimmkörpers (2, 2a, 2b) bilden.

6. System nach Anspruch 4 oder 5, **dadurch gekennzeichnet, dass** die Seitenfläche vertikal ausgerichtet ist oder gegenüber einer Vertikalebene, welche parallel zur Längserstreckungsrichtung ist, nach außen und unten geneigt ist.

7. System nach einem der vorherigen Ansprüche, **dadurch gekennzeichnet, dass** das Integral des Rückstellmoments über dem Rollwinkel, insbesondere bei dynamischen Rollbewegungen, größer ist als das gleiche Integral bei einem System mit Schwimmkörpern desselben Volumens und einer Kreisquerschnittform zwischen den Enden.

8. System nach einem der vorherigen Ansprüche, **dadurch gekennzeichnet, dass** das Rückstellmoment, insbesondere bei dynamischen Rollbewegungen, größer ist als bei einem System mit Schwimmkörpern (2, 2a, 2b) desselben Volumens und einer Kreisquerschnittform zwischen den Enden, insbesondere das Rückstellmoment bei einem Rollwinkel maximal ist, der größer ist als bei einem System mit Schwimmkörpern desselben Volumens und einer Kreisquerschnittform zwischen den Enden.

9. System nach einem der vorherigen Ansprüche, **dadurch gekennzeichnet, dass** der jeweilige Schwimmkörper (2, 2a, 2b) in einem Bereich oberhalb der Körpermitte eine in horizontaler Richtung und senkrecht zur Längserstreckungsrichtung betrachtete Breite aufweist, die größer ist als die Breite in der Schwimmkörpermitte.

10. System nach einem der vorherigen Ansprüche, **dadurch gekennzeichnet, dass** die in horizontaler Richtung betrachtete Breite der Querschnittsform eines Schwimmkörpers (2, 2a, 2b) mit einem gegebenen Volumen von unten nach oben über eine größere Höhe zunehmend ist, als bei einem Schwimmkörper mit Kreisquerschnitt desselben gegebenen Volumens.

11. System nach einem der vorherigen Ansprüche, **dadurch gekennzeichnet, dass** die Breite der Querschnittsform über mehr als 55%, vorzugsweise mehr als 60%, vorzugsweise mehr als 70%, vorzugsweise mehr als 80 %, weiter bevorzugt mehr als 90 % der Gesamthöhe der jeweiligen Querschnittsform zunehmend ist.

12. System nach einem der vorherigen Ansprüche, **dadurch gekennzeichnet, dass** in Rollzuständen, in welchem die beabstandeten Schwimmkörper (2, 2a, 2b) um eine mittig zwischen diesen und parallel zur Längserstreckung liegenden Rollachse um einem Rollwinkel aus der horizontalen Lage verkippt sind, das Querschnittsmaß der senkrecht zur Längserstreckung betrachteten Querschnittsform eines der Schwimmkörper (2, 2a, 2b) in der die Rollsachse umfassenden Horizontalebene für zunehmende Rollwinkel im Winkelbereich von 0 Grad bis mindestens 20 Grad, vorzugsweise 0 Grad bis mindestens 35 Grad, weiter bevorzugt 0 Grad bis mindestens 40 Grad, noch weiter bevorzugt 0 Grad bis mindestens 50 Grad zunehmend ist.

13. System nach einem der vorherigen Ansprüche, **dadurch gekennzeichnet, dass** die Menge aller Schwimmkörper (2, 2a, 2b) zwei Gruppen von Schwimmkörpern (2, 2a, 2b) bildet, wobei die zwei Gruppen quer, insbesondere senkrecht zur Längserstreckungsrichtung beabstandet sind und jede Gruppe von Schwimmkörpern (2, 2a, 2b) wenigstens zwei in der Längsrichtung hintereinander angeordnete Schwimmkörper (2a, 2b) umfasst.

14. System nach Anspruch 13, **dadurch gekennzeichnet, dass** die senkrecht zur Längsrichtung betrachteten Querschnitte der Schwimmkörper (2a, 2b) derselben Gruppe gleiche Eckanzahl aufweisen, insbesondere aber formverschieden sind, vorzugsweise die Querschnittsfläche der in Flugrichtung hinteren Schwimmkörper (2b) größer ist als die Querschnittsfläche der in Flugrichtung vorderen Schwimmkörper (2a).

15. System nach einem der vorherigen Ansprüche, **dadurch gekennzeichnet, dass** ein Ende des Schwimmkörpers (2, 2a, 2b), insbesondere ein in Flugrichtung vorne liegendes Ende eines Schwimmkörpers (2, 2a, 2b), insbesondere eines in einer Gruppe nach Anspruch 13 in Flugrichtung vorne liegenden Schwimmkörpers (2a), eine vom Schwimmkörper (2, 2a, 2b) vorspringende Spitze (5) bildet, insbesondere als Pyramide ausgebildet ist, insbesondere mit einer Pyramidengrundfläche, die der Querschnittsform des Schwimmkörpers (2, 2a, 2b) zwischen seinen Enden entspricht und mit einer von der Grundfläche in Flugrichtung vorspringenden Pyramidenspitze.

16. System nach einem der vorherigen Ansprüche, **dadurch gekennzeichnet, dass** ein jeweiliger Schwimmkörper (2, 2a, 2b) mehrere aufblasbare Teilschwimmkörper umfasst.

17. System nach einem der vorherigen Ansprüche, **dadurch gekennzeichnet, dass** ein jeweiliger Schwimmkörper Versteifungsstrukturen (7) und/oder Formgebungsstrukturen (9) aufweist, insbesondere entlang der Kanten und/oder entlang der Seitenflächen des Schwimmkörpers (2, 2a, 2b), vorzugsweise ein jeweiliger Schwimmkörper (2, 2a, 2b) in dessen Inneren verlaufende Streben (7) und/oder Seile (9) und/oder Verstärkungsnähte und/oder Innenflächen (9) aufweist.

18. System nach Anspruch 17, **dadurch gekennzeichnet, dass** die Versteifungsstrukturen (7) und/oder Formgebungsstrukturen (7, 9) in nicht aufgeblasenem Zustand des jeweiligen Schwimmkörpers (2, 2a, 2b) in einem kollabierten, insbesondere gefalteten Zustand vorliegen und im aufgeblasenen Zustand in einem expandierten Zustand, insbesondere entfaltetem Zustand vorliegen.

19. System nach Anspruch 17 oder 18, **dadurch gekennzeichnet, dass** Versteifungsstreben (7) oder Formgebungsstreben (7) aus Teilstreben gebildet sind, welche eine selbstarretierende Gelenkverbindung aufweisen oder Formgebungsstrukturen (9) eine Seilanordnung oder Innenflächenanordnung bilden, in welcher im expandierten Zustand mehrere Seilstücke / Innenflächen mit einem Ende an Flächen (8) und/oder Kantenbereichen des Schwimmkörpers (2, 2a, 2b) befestigt sind, insbesondere in Umfangsrichtung entlang der Querschnittsform, befestigt sind und mit einem anderen Ende in einem gemeinsamen Befestigungsbereich untereinander verbunden sind.

20. Luftfahrzeug, insbesondere Helikopter, **dadurch gekennzeichnet, dass** es an seinem Landegestell oder seinem Rumpf ein Notschwimmsystem nach einem der vorherigen Ansprüche aufweist, insbesondere, wobei die Längserstreckungsrichtung der Schwimmkörper (2, 2a, 2b) parallel zur Längserstreckungsachse oder quer, insbesondere senkrecht zur Längserstreckungsachse des Luftfahrzeugs (1) ausgerichtet ist.

21. Luftfahrzeug nach Anspruch 20, **dadurch gekennzeichnet, dass** die Lage des Notschwimmsystems zum Luftfahrzeug (1) änderbar ist, insbesondere während des Fluges, vorzugsweise das Notschwimmsystems relativ zum Luftfahrzeug (1) um eine Vertikalachse rotierbar ist.
